# EUROPEAN PATENT SPECIFICATION

(11) **EP 3 588 820 B1**
(45) Date of publication and mention of the grant of the patent: **27.10.2021**
(21) Application number: 18771143.7
(22) Date of filing: 22.03.2018
(51) Int. Cl.: H04L 1/00, H04L 1/18

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(30) Priority: 22.03.2017 CN 201710175715
(43) Date of publication of application: 01.01.2020
(73) Proprietor: Huawei Technologies Co., Ltd., Longgang District Shenzhen, Guangdong 518129 (CN)
(72) Inventor: WEN, Ronghui, Shenzhen Guangdong 518129 (CN); LYU, Yongxia, Shenzhen Guangdong 518129 (CN)
(74) Representative: Goddar, Heinz J.
(86) International application number: PCT/CN2018/079955
(87) International publication number: WO 2018/171657

(56) References cited:
- WO-A1-2015/069811
- CN-A- 1 394 393
- CN-A- 101 765 147
- CN-A- 104 901 782
- JP-B2- 3 719 427
- HUAWEI ET AL: "On DL HARQ for URLLC", 3GPP DRAFT; R1-1704218, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 25 March 2017 (2017-03-25), XP051251027, Retrieved from the Internet: URL:http://www.3gpp.org/ftp/tsg_ran/WG1_RL 1/TSGR1_88b/Docs/ [retrieved on 2017-03-25]
- MU QIN ET AL: "Investigation on Link Adaptation for LTE-Based Machine Type Communication", 2016 IEEE 83RD VEHICULAR TECHNOLOGY CONFERENCE (VTC SPRING), IEEE, 15 May 2016 (2016-05-15), pages 1-5, XP032920219, DOI: 10.1109/VTCSPRING.2016.7504301 [retrieved on 2016-07-05]
- PHILIPS: "Feedback of Channel Quality", 3GPP DRAFT; R2-071391, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134330, [retrieved on 2007-03-22]

## Description

### TECHNICAL FIELD

This application relates to the field of mobile communications, and in particular, to a data transmission method and apparatus.

### BACKGROUND

A major feature of a 5G communications system relative to a 4G communications system is that support for an ultra-reliable and low-latency communications (Ultra-Reliable and Low-Latency Communications, URLLC) service is added. URLLC requires a system to have low-latency and high-reliability performance. A plurality of repeated transmissions may improve reliability of the system. For example, a quantity of required retransmissions and a modulation and coding scheme may be determined based on channel quality before data is sent, and a reliability gain is achieved through the plurality of repeated transmissions.

However, if a same transmission parameter is used for the plurality of repeated transmissions, a case in which the channel quality varies with time cannot be dealt with, and consequently, an effect of the repeated transmission on reliability improvement is weakened.
WO 2015/069811 A1 discloses feedback schemes to assistant link adaptation for re-transmissions and to improve the network throughput and efficiency. When reception failure is a type B failure, then a failure report (FR) frame is feedback from the destination STA to the source STA. In the failure report frame, link adaptation information and information on failure causes are included.

### SUMMARY

To improve transmission reliability, this application provides methods and apparatuses for data transmission and reception, according to the attached claims.

### BRIEF DESCRIPTION OF DRAWINGS

FIG. 1 is a schematic diagram of a network architecture to which embodiments of this application are applied;
FIG. 2 is a flowchart of an embodiment of a data transmission method according to this application;
FIG. 3 is a schematic diagram of a data transmission method according to this application;
FIG. 4 is another schematic diagram of a data transmission method according to this application;
FIG. 5 is still another schematic diagram of a data transmission method according to this application;
FIG. 6 is yet another schematic diagram of a data transmission method according to this application;
FIG. 7 is a structural diagram of an embodiment of a first device according to this application;
FIG. 8 is a structural diagram of another embodiment of a first device according to this application;
FIG. 9 is a structural diagram of an embodiment of a second device according to this application; and
FIG. 10 is a structural diagram of another embodiment of a second device according to this application.

### DESCRIPTION OF EMBODIMENTS

The following describes technical solutions of the embodiments in this application with reference to accompanying drawings.

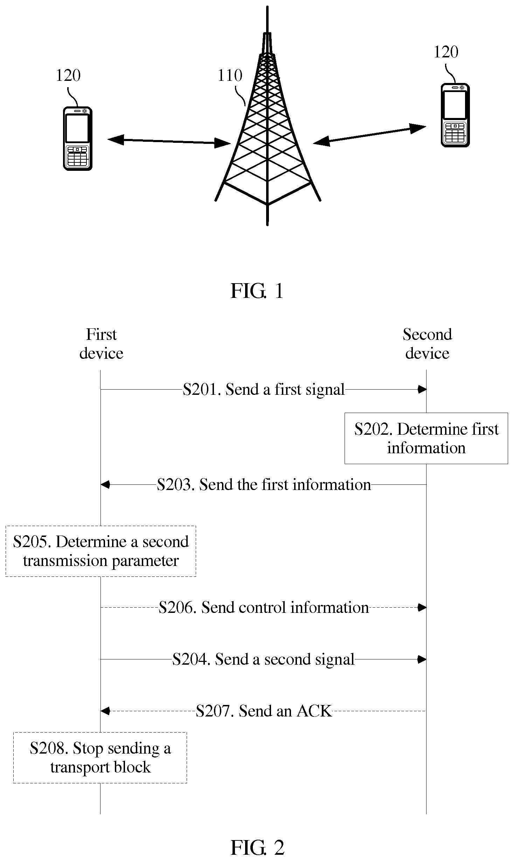

FIG. 1 shows a communications system 100 to which embodiments of this application are applied. The communications system 100 may include at least one radio access network device 110 and a plurality of terminal devices 120 located within coverage of the radio access network device 110. FIG. 1 shows one radio access network device and two terminal devices as an example. Optionally, the communications system 100 may include a plurality of radio access network devices, and another quantity of terminal devices may be included within coverage of each radio access network device. This is not limited in the embodiments of this application.

Optionally, the wireless communications system 100 may further include another network entity such as a network controller or a mobility management entity. This is not limited in the embodiments of this application.

The communications system to which the embodiments of this application are applied may be a global system for mobile communications (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a 5G new radio (NR) system, another wireless communications system in which an orthogonal frequency division multiplexing (OFDM) technology is applied, or the like.

The radio access network device in the embodiments of this application may be used to provide a wireless communication function for a terminal device. The radio access network device may include macro base stations, micro base stations (also referred to as small cells), relay nodes, access points, and the like in various forms. The radio access network device may be a base transceiver station (Base Transceiver Station, BTS) in GSM or CDMA, or may be a NodeB (NodeB, NB) in WCDMA, or may be an evolved NodeB (Evolved Node B, eNB, or e-NodeB) in LTE, or may be a corresponding device gNB in a 5G network. For ease of description, in all the embodiments of this application, all the foregoing apparatuses that provide a wireless communication function for the terminal device are collectively referred to as a radio access network device.

In the embodiments of this application, the terminal device may also be referred to as user equipment (User Equipment, UE), a mobile station (Mobile Station, MS), a mobile terminal (Mobile Terminal), and the like. The terminal device may communicate with one or more core networks by using a radio access network (Radio Access Network, RAN). For example, the terminal device may be a mobile phone (also referred to as a "cellular" phone) or a computer with a mobile terminal. For example, the terminal device may be a portable, pocket-sized, handheld, computer built-in, or in-vehicle mobile apparatus, which exchanges voice and/or data with the radio access network. This is not specifically limited in the embodiments of this application.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

Referring to FIG. 2, an embodiment of a data transmission method provided in this application includes S201, S202, S203, and S204.
S201. A first device sends a first signal to a second device, where the first signal includes a first data signal and a first pilot signal, and the first data signal is generated based on a first transmission parameter.
S202. The second device determines first information based on the first pilot signal.

Optionally, the first information includes transmission parameter indication information and/or channel quality indication information.

For example, the transmission parameter indication information may be a transmission parameter, a correction value for the transmission parameter (namely, a difference between two transmission parameters), or a correction factor for the transmission parameter (namely, a multiplying factor between two transmission parameters), or may be an index number of a transmission parameter or a correction value for the index number of the transmission parameter (namely, a difference between index numbers of two transmission parameters).

For example, when the first information includes the transmission parameter indication information, the second device determines the transmission parameter indication information based on channel quality.

For example, the channel quality indication information may be a corresponding value obtained through calculation based on the channel quality (for example, a log value of the channel quality is calculated), or a correction value for the corresponding value obtained through calculation based on the channel quality (namely, a difference between two corresponding values obtained through calculation based on the channel quality), or may be an index number of the channel quality or a correction value for the index number of the channel quality (namely, a difference between two index numbers of the channel quality).

S203. The second device sends the first information to the first device.

According to the embodiment claimed, in S203, before sending an acknowledgement (ACK)/negative acknowledgement (NACK) corresponding to the first data signal to the first device, the second device sends, to the first device, the first information in response to the first signal.

This is because the first information is determined based on the first pilot signal, and usually, the first data signal needs to be demodulated and decoded so that the ACK/NACK is fed back. Then, the first information may be rapidly fed back before the ACK/NACK.

S204. The first device sends a second signal to the second device after receiving the first information, where the second signal includes a second data signal and a second pilot signal, and the second data signal is generated based on a second transmission parameter.

Optionally, the first transmission parameter and the second transmission parameter include at least one of a modulation scheme, a coding scheme, transmit power, and a beam setting.

Optionally, the transmit power is transmit power of a data signal and/or transmit power of a pilot signal.

For example, the beam setting at least includes at least one type of lobe quality information or precoding matrix information, and the lobe quality information is obtained by a device by measuring, based on a pilot signal (a reference signal), quality of at least one lobe that carries a first information block.

For example, the first pilot signal corresponds to the first data signal, and the second pilot signal corresponds to the second data signal.

Optionally, in S204, if the first device does not receive, from the second device, an ACK corresponding to the transport block and a quantity of transmissions of the transport block does not reach a predetermined value, the first device sends the second signal to the second device after receiving the first information.

In this embodiment, the second device provides a feedback to the first device in a timely manner for the first signal received from the first device, so that the first device can choose, in a timely manner, whether to accordingly adjust a transmission parameter of transmission of the second signal/subsequent transmission, thereby improving reliability of the transmission of the second signal/the subsequent transmission. Such a timely feedback and a possible adjustment occurred accordingly greatly improve transmission quality, and improve system reliability.

Optionally, this embodiment may further include S205.

S205. The first device determines the second transmission parameter based on the first information.

For example, when the first information includes the transmission parameter indication information, and the transmission parameter indication information is the transmission parameter, the first device may directly use the transmission parameter as the second transmission parameter.

For example, when the first information includes the transmission parameter indication information, and the transmission parameter indication information is the correction value for the transmission parameter or the correction factor for the transmission parameter, the first device may calculate the second transmission parameter based on the first transmission parameter by using the correction value for the transmission parameter or the correction factor for the transmission parameter.

For example, when the first information includes the transmission parameter indication information, and the transmission parameter indication information is the index number of the transmission parameter, both the first device and the second device store a same index table of the transmission parameter, and the first device may find the second transmission parameter from the index table of the transmission parameter based on the index number of the transmission parameter.

For example, when the first information includes the transmission parameter indication information, and the transmission parameter indication information is the correction value for the index number of the transmission parameter, both the first device and the second device store a same index table of the transmission parameter, and the first device may calculate an index number of the second transmission parameter based on an index number of the first transmission parameter by using the correction value for the index number of the transmission parameter, and find the second transmission parameter from the index table of the transmission parameter based on the index number of the second transmission parameter.

For example, when the first information includes the channel quality indication information, and the channel quality indication information is the corresponding value obtained through calculation based on the channel quality or the correction value for the corresponding value obtained through calculation based on the channel quality, the first device may accordingly restore the channel quality, and adjust the transmission parameter based on the channel quality.

For example, when the first information includes the channel quality indication information and the channel quality indication information is the index number of the channel quality, both the first device and the second device store a same index table of the channel quality, and the first device may find the channel quality from the index table of the channel quality based on the index number of the channel quality, and adjust the transmission parameter based on the channel quality.

For example, when the first information includes the channel quality indication information, and the channel quality indication information is the correction value for the index number of the channel quality, both the first device and the second device store a same index table of the channel quality, and the first device may calculate an index number of new channel quality based on an index number of previous channel quality by using the correction value for the index number of the channel quality, find the new channel quality from the index table of the channel quality based on the index number of the new channel quality, and adjust the transmission parameter based on the new channel quality.

For example, the second device may determine second information based on the second pilot signal, and send the second information to the first device. The first device may determine a third transmission parameter based on the second information, and send, to the second device, a third data signal and a pilot signal corresponding to the third data signal that are generated based on the third transmission parameter, and the first data signal, the second data signal, and the third data signal carry a same transport block. These operations are repeated until repeated transmission of the transport block ends.

The foregoing describes a case in which the first device chooses to adjust the transmission parameter based on the first information. For example, the first device may alternatively choose not to adjust the transmission parameter based on the first information, and may even choose not to adjust the transmission parameter. For example, the first device may consider that the first information received from the second device is unreliable, and therefore may choose to ignore the first information, but adjust the transmission parameter based on channel quality measured by the first device. In particular, when the first device is an access network device, and the second device is a terminal device, because the access network device has higher permission, the access network device evaluates, based on channel quality measured by the access network device, whether the first information is reliable, and further determines whether to adjust the transmission parameter based on the first information.

Optionally, this embodiment may further include S206.

S206. Before sending the second signal or when sending the second signal, the first device sends, to the second device, control information used to indicate the second transmission parameter.

For example, the first device and the second device may agree in advance that if the first device does not send the control information, it indicates by default that the first device adjusts the transmission parameter based on the first information, or it indicates by default that the first device does not adjust the transmission parameter.

Optionally, the control information is notified by using common control signaling (Common DCI) or user-specific control signaling (UE Specific DCI).

Optionally, the first device is a radio access network device, and the second device is a terminal device.

In this case, optionally, a time-frequency resource for sending the first data signal and a time-frequency resource for sending the second data signal are predefined and notified to the second device by the first device. For example, this may correspond to a scenario in which the radio access network device instructs in advance the terminal device to receive data.

Also in this case, optionally, the first transmission parameter is predefined and notified to the second device by the first device. For example, this may correspond to the scenario in which the radio access network device instructs in advance the terminal device to receive the data.

Optionally, the first device is a terminal device, and the second device is a radio access network device.

In this case, optionally, a time-frequency resource for sending the first data signal and a time-frequency resource for sending the second data signal are predefined and notified to the first device by the second device. For example, this may correspond to a scenario in which the radio access network device instructs in advance the terminal device to send data. Alternatively, a time-frequency resource for sending the first data signal and a time-frequency resource for sending the second data signal are agreed upon by the first device and the second device in advance. For example, this may correspond to a scenario in which the terminal device does not wait for scheduling but directly sends data on a preconfigured resource.

Also in this case, optionally, the first transmission parameter is predefined and notified to the first device by the second device. For example, this may correspond to the scenario in which the radio access network device instructs in advance the terminal device to send the data. Alternatively, the first transmission parameter is agreed upon by the first device and the second device in advance. For example, this may correspond to the scenario in which the terminal device does not wait for scheduling but directly sends the data on the preconfigured resource. Alternatively, the first transmission parameter is obtained by the first device based on a channel quality status measured and reported most recently. For example, this may correspond to the scenario in which the terminal device does not wait for scheduling but directly sends the data on the preconfigured resource.

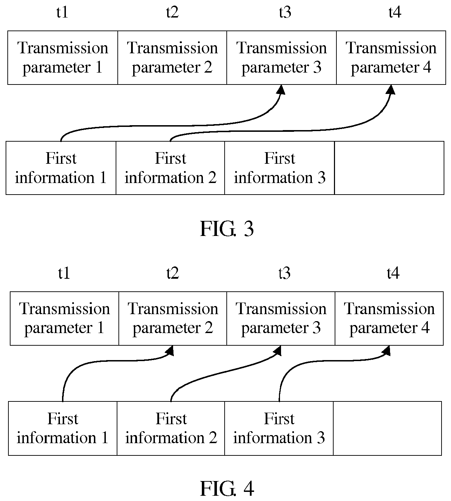

For example, the first transmission parameter may be a transmission parameter adjusted based on a previous feedback performed by the second device. For example, as shown in FIG. 4, the first signal indicates a second repeated transmission, and the first transmission parameter is a transmission parameter 2 that is determined by the first device based on first information 1 fed back by the second device.

Optionally, when the first transmission parameter is predefined and notified to the second device by the first device, or when the first transmission parameter is predefined and notified to the first device by the second device, the first transmission parameter is notified by using common control signaling or user-specific control signaling.

When the first transmission parameter is agreed upon by the first device and the second device in advance, the first transmission parameter is notified by using radio resource control signaling.

Optionally, this embodiment further includes S207.

S207. If verification on the transport block succeeds, the second device sends an ACK corresponding to the transport block to the first device.

For example, if the verification on the transport block succeeds, the second device stops feeding back the first information to the first device. To be specific, if the verification on the transport block succeeds, even if a next repeated transmission of the transport block is subsequently received, the second device does not perform feedback for the repeated transmission.

Optionally, this embodiment further includes S208.

S208. If the first device receives, from the second device, the ACK corresponding to the transport block or the quantity of transmissions of the transport block reaches the predetermined value, the first device stops sending the transport block to the second device.

In this manner, resource occupation can be reduced, and a conflict with another device for data transmission can be avoided.

In this embodiment, the first data signal and the second data signal carry a same transport block (Transport Block, TB). To be specific, the first signal and the second signal correspond to same original data.

In this embodiment, for example, the first signal and the second signal may indicate adjacent transmissions of the transport block, or may indicate non-adjacent transmissions of the transport block. To be specific, the first device may adjust, based on a feedback of the second device for a specific repeated transmission (an n^{th} repeated transmission), not merely a transmission parameter of a repeated transmission (an (n+1)^{th} repeated transmission) immediately after the specific repeated transmission, but a transmission parameter of any subsequent repeated transmission (for example, the (n+1)^{th} repeated transmission, an (n+2)^{th} repeated transmission, and an (n+3)^{th} repeated transmission).

For example, when the feedback of the second device cannot reach the first device due to a latency before the first device performs a next repeated transmission, the first device may choose, when performing the next repeated transmission, not to adjust the transmission parameter temporarily or adjust the transmission parameter based on other information, but adjust subsequent repeated transmission based on the feedback.

In particular, for example, when the first device is an access network device, and the second device is a terminal device (to be specific, repeated transmission of the data block is downlink transmission, and a feedback of the first information is uplink transmission), because there is a latency of transmitting a radio signal, the terminal device receives, at a moment (t1+τ), a downlink signal that is sent by the access network device at a moment t1. In addition, for ease of processing of the access network device, uplink signals that are sent by all terminal devices connected to a same access network device reach the access network device at a same time, and the terminal device sends, at a moment (t1-τ), an uplink signal corresponding to the moment t1. Therefore, the terminal device has no time to perform, in the uplink signal corresponding to the moment t1, feedback for the downlink signal corresponding to the moment t1, and can only perform feedback at a moment t2 or a subsequent moment, and consequently, the access network device cannot receive the feedback before the moment t2. In this way, a feedback of the terminal device for the moment t1 can only be applied to an adjustment performed on the transmission parameter by the access network device at a moment t3 and a subsequent moment.

For example, as shown in FIG. 3, when the transport block is repeatedly transmitted for four continuous times, the first signal may indicate a first transmission (the first transmission parameter is a transmission parameter 1), and the second signal may indicate a third transmission (the second transmission parameter is a transmission parameter 3). To be specific, the first device adjusts the transmission parameter of the third transmission based on a feedback of the second device for the first transmission. Alternatively, the first signal may indicate a second transmission (the first transmission parameter is a transmission parameter 2), and the second signal may indicate a fourth transmission (the second transmission parameter is a transmission parameter 4). To be specific, the first device adjusts the transmission parameter of the fourth transmission based on a feedback of the second device for the second transmission.

For another example, as shown in FIG. 4, the first signal may indicate a first transmission (the first transmission parameter is a transmission parameter 1), and the second signal may indicate a second transmission (the second transmission parameter is a transmission parameter 2). To be specific, the first device adjusts the transmission parameter of the second transmission based on a feedback of the second device for the first transmission. Alternatively, the first signal may indicate a second transmission (the first transmission parameter is a transmission parameter 2), and the second signal may indicate a third transmission (the second transmission parameter is a transmission parameter 3). To be specific, the first device adjusts the transmission parameter of the third transmission based on a feedback of the second device for the second transmission. Operations are repeated in this way. For example, the first device and the second device may agree upon a specific transmission of the transport block or a specific time of transmission of the transport block in advance to which the first information in response to the first signal is applied.

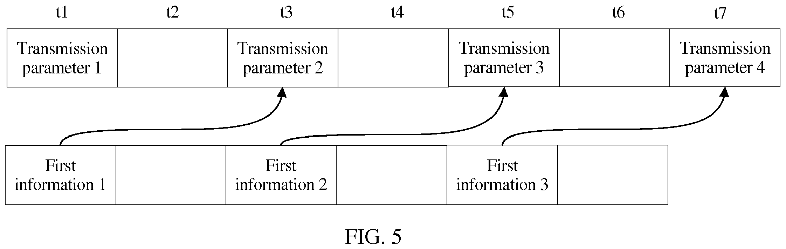

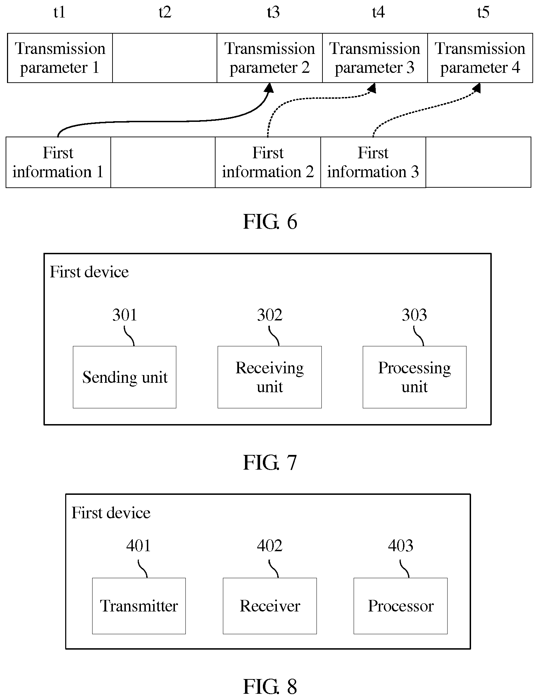

For example, a plurality of repeated transmissions of the transport block may be continuous (as shown in FIG. 4) or may be discontinuous (as shown in FIG. 5 and FIG. 6). An advantage of discontinuous transmission is that a time is reserved for determining the first information, but this may prolong an overall time-frequency resource for sending data. However, a URLLC system has a requirement on a latency, in other words, sending is completed within a specific time. A quantity of transmissions may be reduced due to spaced sending, and reliability improvement is affected.

For example, when the plurality of repeated transmissions of the transport block are discontinuous, the plurality of repeated transmissions of the transport block may be equally spaced (as shown in FIG. 5), may be unequally spaced, or may even be partially spaced and partially continuous (as shown in FIG. 6). For example, as shown in FIG. 6, a first transmission of the transport block and a second transmission of the transport block are spaced, and the second transmission of the transport block and subsequent repeated transmissions are continuous. This manner has the following advantage: A transmission parameter used by the first device may be inaccurate during the first transmission of the transport block because the transmission parameter is out of time, the first device starts the second transmission of the transport block after a period of time (for example, one slot), and a time is reserved for a feedback of the second device for the first transmission of the transport block, so that transmission parameters (a transmission parameter 2, a transmission parameter 3, and a transmission parameter 4) used for the second transmission of the transport block and the subsequent repeated transmissions are more accurate. The channel quality usually does not greatly change within a relatively short time. Therefore, even if subsequently, the first device cannot perform an adjustment any more based on a subsequent feedback of the second device, or even uses the transmission parameter of the second transmission, the transmission parameter used by the first device is relatively accurate. In this way, both a latency requirement and reliability can be better considered.

Corresponding to the foregoing method, this application provides embodiments of a first device and a second device, and the first device and the second device may respectively perform the steps in the foregoing method embodiment.

Referring to FIG. 7, an embodiment of a first device provided in this application includes a sending unit 301, a receiving unit 302, and a processing unit 303.

The sending unit 301 is configured to send a first signal to a second device, where the first signal includes a first data signal and a first pilot signal, and the first data signal is generated based on a first transmission parameter.

The receiving unit 302 is configured to receive, from the second device, first information in response to the first signal.

Optionally, the first information includes transmission parameter indication information and/or channel quality indication information, and/or the first information is determined based on the first pilot signal.

Optionally, the receiving unit 302 is further configured to: before receiving, from the second device, an ACK/NACK corresponding to the first data signal, receive, from the second device, the first information in response to the first signal.

The sending unit 301 is further configured to send a second signal to the second device after the receiving unit 302 receives the first information, where the second signal includes a second data signal and a second pilot signal, and the second data signal is generated based on a second transmission parameter.

Optionally, the first transmission parameter and the second transmission parameter include at least one of a modulation scheme, a coding scheme, transmit power, and a beam setting.

Optionally, the transmit power is transmit power of a data signal and/or transmit power of a pilot signal.

Optionally, the sending unit 301 is further configured to: if the first device does not receive, from the second device, an ACK corresponding to a transport block and a quantity of transmissions of the transport block does not reach a predetermined value, send the second signal to the second device after the first information is received.

Optionally, this embodiment may further include the processing unit 303.

The processing unit 303 is configured to determine the second transmission parameter based on the first information.

Optionally, the sending unit 301 is further configured to: before sending the second signal or when sending the second signal, send, to the second device, control information used to indicate the second transmission parameter.

Optionally, the control information is notified by using common control signaling or user-specific control signaling.

Optionally, the first device is a radio access network device, and the second device is a terminal device.

In this case, optionally, a time-frequency resource for sending the first data signal and a time-frequency resource for sending the second data signal are predefined and notified to the second device by the first device.

Also in this case, optionally, the first transmission parameter is predefined and notified to the second device by the first device.

Optionally, the first device is a terminal device, and the second device is a radio access network device.

In this case, optionally, a time-frequency resource for sending the first data signal and a time-frequency resource for sending the second data signal are predefined and notified to the first device by the second device; or a time-frequency resource for sending the first data signal and a time-frequency resource for sending the second data signal are agreed upon by the first device and the second device in advance.

Also in this case, optionally, the first transmission parameter is predefined and notified to the first device by the second device; or the first transmission parameter is agreed upon by the first device and the second device in advance; or the first transmission parameter is obtained by the first device based on a channel quality status measured and reported most recently.

Optionally, when the first transmission parameter is predefined and notified to the second device by the first device, or when the first transmission parameter is predefined and notified to the first device by the second device, the first transmission parameter is notified by using common control signaling or user-specific control signaling.

When the first transmission parameter is agreed upon by the first device and the second device in advance, the first transmission parameter is notified by using radio resource control signaling.

Optionally, the sending unit 301 is further configured to: if the ACK corresponding to the transport block is received from the second device or the quantity of transmissions of the transport block reaches the predetermined value, stop sending the transport block to the second device.

For detailed descriptions of technical details and beneficial effects in this embodiment, refer to the foregoing method embodiment.

Referring to FIG. 8, another embodiment of a first device provided in this application includes a transmitter 401, a receiver 402, and a processor 403.

The transmitter 401 is configured to send a first signal to a second device, where the first signal includes a first data signal and a first pilot signal, and the first data signal is generated based on a first transmission parameter.

The receiver 402 is configured to receive, from the second device, first information in response to the first signal.

Optionally, the first information includes transmission parameter indication information and/or channel quality indication information, and/or the first information is determined based on the first pilot signal.

Optionally, the receiver 402 is further configured to: before receiving, from the second device, an ACK/NACK corresponding to the first data signal, receive, from the second device, the first information in response to the first signal.

The transmitter 401 is further configured to send a second signal to the second device after the receiver 402 receives the first information, where the second signal includes a second data signal and a second pilot signal, and the second data signal is generated based on a second transmission parameter.

Optionally, the first transmission parameter and the second transmission parameter include at least one of a modulation scheme, a coding scheme, transmit power, and a beam setting.

Optionally, the transmit power is transmit power of a data signal and/or transmit power of a pilot signal.

Optionally, the transmitter 401 is further configured to: if the first device does not receive, from the second device, an ACK corresponding to a transport block and a quantity of transmissions of the transport block does not reach a predetermined value, send the second signal to the second device after the first information is received.

Optionally, this embodiment may further include the processor 403.

The processor 403 is configured to determine the second transmission parameter based on the first information.

Optionally, the transmitter 401 is further configured to: before sending the second signal or when sending the second signal, send, to the second device, control information used to indicate the second transmission parameter.

Optionally, the control information is notified by using common control signaling or user-specific control signaling.

Optionally, the first device is a radio access network device, and the second device is a terminal device.

In this case, optionally, a time-frequency resource for sending the first data signal and a time-frequency resource for sending the second data signal are predefined and notified to the second device by the first device.

Also in this case, optionally, the first transmission parameter is predefined and notified to the second device by the first device.

Optionally, the first device is a terminal device, and the second device is a radio access network device.

In this case, optionally, a time-frequency resource for sending the first data signal and a time-frequency resource for sending the second data signal are predefined and notified to the first device by the second device; or a time-frequency resource for sending the first data signal and a time-frequency resource for sending the second data signal are agreed upon by the first device and the second device in advance.

Also in this case, optionally, the first transmission parameter is predefined and notified to the first device by the second device; or the first transmission parameter is agreed upon by the first device and the second device in advance; or the first transmission parameter is obtained by the first device based on a channel quality status measured and reported most recently.

Optionally, when the first transmission parameter is predefined and notified to the second device by the first device, or when the first transmission parameter is predefined and notified to the first device by the second device, the first transmission parameter is notified by using common control signaling or user-specific control signaling.

When the first transmission parameter is agreed upon by the first device and the second device in advance, the first transmission parameter is notified by using radio resource control signaling.

Optionally, the transmitter 401 is further configured to: if the ACK corresponding to the transport block is received from the second device or the quantity of transmissions of the transport block reaches the predetermined value, stop sending the transport block to the second device.

For detailed descriptions of technical details and beneficial effects in this embodiment, refer to the foregoing method embodiment.

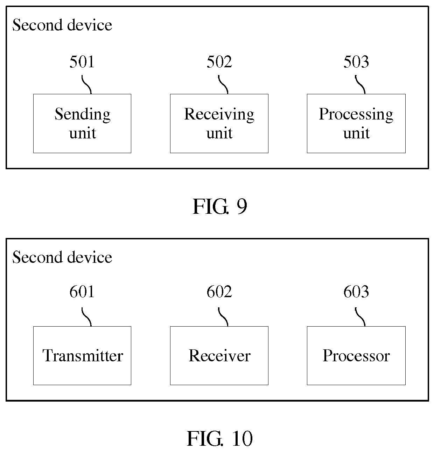

Referring to FIG. 9, an embodiment of a second device provided in this application includes a sending unit 501, a receiving unit 502, and a processing unit 503.

The receiving unit 502 is configured to receive a first signal from a first device, where the first signal includes a first data signal and a first pilot signal, and the first data signal is generated based on a first transmission parameter.

The processing unit 503 is configured to determine first information based on the first pilot signal.

Optionally, the first information includes transmission parameter indication information and/or channel quality indication information.

The sending unit 501 is configured to send the first information to the first device.

Optionally, the sending unit 501 is further configured to: before sending an ACK/NACK corresponding to the first data signal to the first device, send the first information to the first device.

The receiving unit 502 is further configured to receive a second signal from the first device after the sending unit 501 sends the first information, where the second signal includes a second data signal and a second pilot signal, and the second data signal is generated based on a second transmission parameter.

Optionally, the first transmission parameter and the second transmission parameter include at least one of a modulation scheme, a coding scheme, transmit power, and a beam setting.

Optionally, the transmit power is transmit power of a data signal and/or transmit power of a pilot signal.

Optionally, the receiving unit 502 is further configured to: if the sending unit 501 does not send an ACK corresponding to a transport block to the first device and a quantity of transmissions of the transport block does not reach a predetermined value, receive the second signal from the first device after the sending unit 501 sends the first information.

Optionally, the second transmission parameter is determined based on the first information.

Optionally, the receiving unit 502 is further configured to: before receiving the second signal or when receiving the second signal, receive, from the first device, control information used to indicate the second transmission parameter.

Optionally, the control information is notified by using common control signaling or user-specific control signaling.

Optionally, the first device is a radio access network device, and the second device is a terminal device.

In this case, optionally, a time-frequency resource for sending the first data signal and a time-frequency resource for sending the second data signal are predefined and notified to the second device by the first device.

Also in this case, optionally, the first transmission parameter is predefined and notified to the second device by the first device.

Optionally, the first device is a terminal device, and the second device is a radio access network device.

In this case, optionally, a time-frequency resource for sending the first data signal and a time-frequency resource for sending the second data signal are predefined and notified to the first device by the second device; or a time-frequency resource for sending the first data signal and a time-frequency resource for sending the second data signal are agreed upon by the first device and the second device in advance.

Also in this case, optionally, the first transmission parameter is predefined and notified to the first device by the second device; or the first transmission parameter is agreed upon by the first device and the second device in advance; or the first transmission parameter is obtained by the first device based on a channel quality status measured and reported most recently.

Optionally, when the first transmission parameter is predefined and notified to the second device by the first device, or when the first transmission parameter is predefined and notified to the first device by the second device, the first transmission parameter is notified by using common control signaling or user-specific control signaling.

When the first transmission parameter is agreed upon by the first device and the second device in advance, the first transmission parameter is notified by using radio resource control signaling.

Optionally, the sending unit 501 is further configured to: if verification on the transport block succeeds, send the ACK corresponding to the transport block to the first device.

For detailed descriptions of technical details and beneficial effects in this embodiment, refer to the foregoing method embodiment.

Referring to FIG. 10, an embodiment of a second device provided in this application includes a transmitter 601, a receiver 602, and a processor 603.

The receiver 602 is configured to receive a first signal from a first device, where the first signal includes a first data signal and a first pilot signal, and the first data signal is generated based on a first transmission parameter.

The processor 603 is configured to determine first information based on the first pilot signal.

Optionally, the first information includes transmission parameter indication information and/or channel quality indication information.

The transmitter 601 is configured to send the first information to the first device.

Optionally, the transmitter 601 is further configured to: before sending an ACK/NACK corresponding to the first data signal to the first device, send the first information to the first device.

The receiver 602 is further configured to receive a second signal from the first device after the transmitter 601 sends the first information, where the second signal includes a second data signal and a second pilot signal, and the second data signal is generated based on a second transmission parameter.

Optionally, the first transmission parameter and the second transmission parameter include at least one of a modulation scheme, a coding scheme, transmit power, and a beam setting.

Optionally, the transmit power is transmit power of a data signal and/or transmit power of a pilot signal.

Optionally, the receiver 602 is further configured to: if the transmitter 601 does not send an ACK corresponding to a transport block to the first device and a quantity of transmissions of the transport block does not reach a predetermined value, receive the second signal from the first device after the transmitter 601 sends the first information.

Optionally, the second transmission parameter is determined based on the first information.

Optionally, the receiver 602 is further configured to: before receiving the second signal or when receiving the second signal, receive, from the first device, control information used to indicate the second transmission parameter.

Optionally, the control information is notified by using common control signaling or user-specific control signaling.

Optionally, the first device is a radio access network device, and the second device is a terminal device.

In this case, optionally, a time-frequency resource for sending the first data signal and a time-frequency resource for sending the second data signal are predefined and notified to the second device by the first device.

Also in this case, optionally, the first transmission parameter is predefined and notified to the second device by the first device.

Optionally, the first device is a terminal device, and the second device is a radio access network device.

In this case, optionally, a time-frequency resource for sending the first data signal and a time-frequency resource for sending the second data signal are predefined and notified to the first device by the second device; or a time-frequency resource for sending the first data signal and a time-frequency resource for sending the second data signal are agreed upon by the first device and the second device in advance.

Also in this case, optionally, the first transmission parameter is predefined and notified to the first device by the second device; or the first transmission parameter is agreed upon by the first device and the second device in advance; or the first transmission parameter is obtained by the first device based on a channel quality status measured and reported most recently.

Optionally, when the first transmission parameter is predefined and notified to the second device by the first device, or when the first transmission parameter is predefined and notified to the first device by the second device, the first transmission parameter is notified by using common control signaling or user-specific control signaling.

When the first transmission parameter is agreed upon by the first device and the second device in advance, the first transmission parameter is notified by using radio resource control signaling.

Optionally, the transmitter 601 is further configured to: if verification on the transport block succeeds, send the ACK corresponding to the transport block to the first device.

For detailed descriptions of technical details and beneficial effects in this embodiment, refer to the foregoing method embodiment.

A person of ordinary skill in the art may understand that all or some of the steps of the foregoing embodiments may be implemented by hardware or a program instructing related hardware. The program may be stored in a computer-readable storage medium. The storage medium mentioned above may be a read-only memory, a magnetic disk, an optical disc, or the like.

The foregoing descriptions are merely examples of this application, but are not intended to limit this application. Any modification, equivalent replacement, or improvement made without departing from principle of this application should fall within the protection scope of this application, as defined by the attached claims.

## Claims

1. A data transmission method, wherein the method is applied to a first device and the method comprises:
sending (S201) a first signal to a second device, wherein the first signal comprises a first data signal and a first pilot signal, and the first data signal is generated based on a first transmission parameter; **characterised by**:
receiving (S203), from the second device, first information in response to the first signal before receiving (S207), from the second device, an ACK/NACK corresponding to the first data signal;
determining (205) a second transmission parameter based on the first information when the first information is evaluated as reliable;
sending (S204) a second signal to the second device after receiving the first information, wherein the second signal comprises a second data signal and a second pilot signal, and the second data signal is generated based on the second transmission parameter, wherein the first data signal and the second data signal carry a same transport block; and
receiving (S207), from the second device, the ACK/NACK corresponding to the first data signal.

2. The method according to claim 1, wherein
the first information comprises transmission parameter indication information and/or channel quality indication information; and/or
the first information is determined based on the first pilot signal.

3. The method according to claim 1 or 2, wherein the transmission parameter comprises at least one of a modulation scheme, a coding scheme, transmit power, and a beam setting.

4. The method according to any one of claims 1 to 3, wherein the method further comprises:
before sending the second signal or when sending the second signal, sending (S206), to the second device, control information used to indicate the second transmission parameter.

5. The method according to any one of claims 1 to 4, wherein sending the second signal to the second device after receiving the first information comprises:
if an ACK corresponding to the transport block is not received from the second device and a quantity of transmissions of the transport block does not reach a predetermined value, sending the second signal to the second device after receiving the first information.

6. A data reception method, wherein the method comprises:
receiving (S201) a first signal from a first device, wherein the first signal comprises a first data signal and a first pilot signal, and the first data signal is generated based on a first transmission parameter; **characterised by**:
determining (S202) first information based on the first pilot signal;
sending (S203) the first information to the first device before sending (S207) an ACK/NACK corresponding to the first data signal to the first device;
receiving a second signal from the first device after sending the first information, wherein the second signal comprises a second data signal and a second pilot signal, and the second data signal is generated based on a second transmission parameter, wherein the first data signal and the second data signal carry a same transport block; and
sending (S207) the ACK/NACK corresponding to the first data signal to the first device.

7. The method according to claim 6, wherein
the first information comprises transmission parameter indication information and/or channel quality indication information.

8. The method according to claim 6 or 7, wherein the second transmission parameter is determined based on the first information.

9. The method according to any one of claims 6 to 8, wherein the transmission parameter comprises at least one of a modulation scheme, a coding scheme, transmit power, and a beam setting.

10. The method according to any one of claims 6 to 9, wherein the method further comprises:
before receiving the second signal or when receiving the second signal, receiving, from the first device, control information used to indicate the second transmission parameter.

11. An apparatus comprising means to carry out the method steps of any one of claims 1 to 10.

12. A computer-readable storage medium comprising instructions which, when executed by a computer, cause the computer to carry out the method according to any one of claims 1 to 10.

## Patentansprüche

1. Datenübertragungsverfahren, wobei das Verfahren auf eine erste Vorrichtung angewendet wird und das Verfahren Folgendes umfasst:
Senden (S201) eines ersten Signals an eine zweite Vorrichtung, wobei das erste Signal ein erstes Datensignal und einen ersten Pilotton umfasst und das erste Datensignal basierend auf einem ersten Übertragungsparameter erzeugt wird;
**gekennzeichnet durch** Folgendes:
Empfangen (S203), von der zweiten Vorrichtung, von ersten Informationen als Reaktion auf das erste Signal vor dem Empfangen (S207), von der zweiten Vorrichtung, einer ACK/NACK, die dem ersten Datensignal entspricht;
Bestimmen (205) eines zweiten Übertragungsparameters basierend auf den ersten Informationen, wenn die ersten Informationen als zuverlässig bewertet werden;
Senden (S204) eines zweiten Signals an die zweite Vorrichtung nach Empfangen der ersten Informationen, wobei das zweite Signal ein zweites Datensignal und einen zweiten Pilotton umfasst und das zweite Datensignal basierend auf dem zweiten Übertragungsparameter erzeugt wird, wobei das erste Datensignal und das zweite Datensignal einen gleichen Transportblock tragen; und
Empfangen (S207), von der zweiten Vorrichtung, der ACK/NACK, die dem ersten Datensignal entspricht.

2. Verfahren nach Anspruch 1, wobei
die ersten Informationen Übertragungsparameteranzeigeinformationen und/oder Kanalqualitätsanzeigeinformationen umfassen; und/oder
die ersten Informationen basierend auf dem ersten Pilotton bestimmt werden.

3. Verfahren nach Anspruch 1 oder 2, wobei der Übertragungsparameter ein Modulationsschema, ein Codierschema, eine Sendeleistung und/oder eine Strahleinstellung umfasst.

4. Verfahren nach einem der Ansprüche 1 bis 3, wobei das Verfahren ferner Folgendes umfasst:
vor dem Senden des zweiten Signals oder wenn das zweite Signal gesendet wird, Senden (S206), von Steuerinformationen an die zweite Vorrichtung, die verwendet werden, um den zweiten Übertragungsparameter anzuzeigen.

5. Verfahren nach einem der Ansprüche 1 bis 4, wobei das Senden des zweiten Signals an die zweite Vorrichtung nach dem Empfangen der ersten Informationen Folgendes umfasst:
falls eine ACK, die dem Transportblock entspricht, nicht von der zweiten Vorrichtung empfangen wird und eine Anzahl von Übertragungen des Transportblocks einen vorbestimmten Wert nicht erreicht, Senden des zweiten Signals an die zweite Vorrichtung nach dem Empfangen der ersten Informationen.

6. Datenempfangsverfahren, wobei das Verfahren Folgendes umfasst:
Empfangen (S201) eines ersten Signals von einer ersten Vorrichtung, wobei das erste Signal ein erstes Datensignal und einen ersten Pilotton umfasst und das erste Datensignal basierend auf einem ersten Übertragungsparameter erzeugt wird;
**gekennzeichnet durch** Folgendes:
Bestimmen (S202) der ersten Informationen basierend auf dem ersten Pilotton;
Senden (S203) der ersten Informationen an die erste Vorrichtung vor dem Senden (S207) einer ACK/NACK, die dem ersten Datensignal entspricht, an die erste Vorrichtung;
Empfangen eines zweiten Signals von der ersten Vorrichtung nach dem Senden der ersten Informationen, wobei das zweite Signal ein zweites Datensignal und einen zweiten Pilotton umfasst und das zweite Datensignal basierend auf einem zweiten Übertragungsparameter erzeugt wird, wobei das erste Datensignal und das zweite Datensignal einen gleichen Transportblock tragen; und
Senden (S207) der ACK/NACK, die dem ersten Datensignal entspricht, an die erste Vorrichtung.

7. Verfahren nach Anspruch 6, wobei
die ersten Informationen Übertragungsparameteranzeigeinformationen und/oder Kanalqualitätsanzeigeinformationen umfassen.

8. Verfahren nach Anspruch 6 oder 7, wobei der zweite Übertragungsparameter basierend auf den ersten Informationen bestimmt wird.

9. Verfahren nach einem der Ansprüche 6 bis 8, wobei der Übertragungsparameter ein Modulationsschema, ein Codierschema, eine Sendeleistung und/oder eine Strahleinstellung umfasst.

10. Verfahren nach einem der Ansprüche 6 bis 9, wobei das Verfahren ferner Folgendes umfasst:
vor dem Empfangen des zweiten Signals oder wenn das zweite Signal empfangen wird, Empfangen, von der ersten Vorrichtung, von Steuerinformationen, die verwendet werden, um den zweiten Übertragungsparameter anzuzeigen.

11. Einrichtung, die Mittel umfasst, um die Verfahrensschritte nach einem der Ansprüche 1 bis 10 auszuführen.

12. Computerlesbares Speichermedium, das Anweisungen umfasst, die, wenn sie durch einen Computer ausgeführt werden, den Computer veranlassen, das Verfahren nach einem der Ansprüche 1 bis 10 auszuführen.

## Revendications

1. Procédé de transmission de données, le procédé étant appliqué à un premier dispositif et le procédé comprenant :
l'envoi (S201) d'un premier signal à un second dispositif, le premier signal comprenant un premier signal de données et un premier signal pilote, et le premier signal de données étant généré sur la base d'un premier paramètre de transmission ; **caractérisé par** :
la réception (S203), depuis le second dispositif, de premières informations en réponse au premier signal avant réception (S207), depuis le second dispositif, d'un ACK / NACK correspondant au premier signal de données ;
la détermination (205) d'un second paramètre de transmission sur la base des premières informations lorsque les premières informations sont évaluées comme fiables ;
l'envoi (S204) d'un second signal au second dispositif après réception des premières informations, le second signal comprenant un second signal de données et un second signal pilote, et le second signal de données étant généré sur la base du second paramètre de transmission, le premier signal de données et le second signal de données transportant un même bloc de transport ; et
la réception (S207), depuis le second dispositif, de l'ACK / NACK correspondant au premier signal de données.

2. Procédé selon la revendication 1, dans lequel
les premières informations comprennent des informations d'indication de paramètre de transmission et/ou des informations d'indication de qualité de canal ;
et/ou
les premières informations sont déterminées sur la base du premier signal pilote.

3. Procédé selon la revendication 1 ou 2, dans lequel le paramètre de transmission comprend un schéma de modulation, et/ou un schéma de codage, et/ou une puissance de transmission et/ou un réglage de faisceau.

4. Procédé selon l'une quelconque des revendications 1 à 3, dans lequel le procédé comprend en outre :
avant l'envoi du second signal ou lors de l'envoi du second signal, l'envoi (S206), au second dispositif, d'informations de commande servant à indiquer le second paramètre de transmission.

5. Procédé selon l'une quelconque des revendications 1 à 4, dans lequel l'envoi du second signal au second dispositif après réception des premières informations comprend :
si un ACK correspondant au bloc de transport n'est pas reçu depuis le second dispositif et qu'une quantité de transmissions du bloc de transport n'atteint pas une valeur prédéterminée, l'envoi du second signal au second dispositif après réception des premières informations.

6. Procédé de réception de données, dans lequel ledit procédé comprend :
la réception (S201) d'un premier signal provenant d'un premier dispositif, le premier signal comprenant un premier signal de données et un premier signal pilote, et le premier signal de données étant généré sur la base d'un premier paramètre de transmission ; **caractérisé par** :
la détermination (S202) des premières informations sur la base du premier signal pilote ;
l'envoi (S203) des premières informations au premier dispositif avant l'envoi (S207) d'un ACK / NACK correspondant au premier signal de données au premier dispositif ;
la réception d'un second signal provenant du premier dispositif après l'envoi des premières informations, le second signal comprenant un second signal de données et un second signal pilote, et le second signal de données étant généré sur la base d'un second paramètre de transmission, le premier signal de données et le second signal de données transportant un même bloc de transport ; et
l'envoi (S207) de l'ACK / NACK correspondant au premier signal de données au premier dispositif.

7. Procédé selon la revendication 6, dans lequel
les premières informations comprennent des informations d'indication de paramètre de transmission et/ou des informations d'indication de qualité de canal.

8. Procédé selon la revendication 6 ou 7, dans lequel le second paramètre de transmission est déterminé sur la base des premières informations.

9. Procédé selon l'une quelconque des revendications 6 à 8, dans lequel le paramètre de transmission comprend un schéma de modulation, et/ou un schéma de codage, et/ou une puissance de transmission et/ou un réglage de faisceau.

10. Procédé selon l'une quelconque des revendications 6 à 9, le procédé comprenant en outre :
avant la réceeption du second signal ou lors de la réception du second signal, la réception, en provenance du premier dispositif, d'informations de commande utilisées servant à indiquer le second paramètre de transmission.

11. Appareil comprenant des moyens pour mettre en oeuvre les étapes du procédé de l'une quelconque des revendications 1 à 10.

12. Support de stockage lisible par ordinateur comprenant des instructions qui, lorsqu'elles sont exécutées par un ordinateur, amènent l'ordinateur à mettre en oeuvre le procédé selon l'une quelconque des revendications 1 à 10.
